(19) Europäisches Patentamt
European Patent Office
Office européen des brevets

(11) **EP 3 736 190 B1**

(12) **EUROPÄISCHE PATENTSCHRIFT**

(45) Veröffentlichungstag und Bekanntmachung des Hinweises auf die Patenterteilung:
**08.12.2021   Patentblatt 2021/49**

(21) Anmeldenummer: **20157057.9**

(22) Anmeldetag: **13.02.2020**

(51) Int Cl.:
**B60W 30/184** (2012.01)     **B60K 6/46** (2007.10)
**B60W 50/038** (2012.01)    **B60W 50/00** (2006.01)
**B60W 10/06** (2006.01)

(54) **HYBRIDFAHRZEUG UND VERFAHREN ZUM ANPASSEN EINER LEISTUNGSBEGRENZUNG EINES VERBRENNUNGSMOTORS EINES HYBRIDFAHRZEUGS**

HYBRID VEHICLE AND METHOD FOR ADJUSTING A POWER LIMITATION OF A COMBUSTION ENGINE OF A HYBRID VEHICLE

VÉHICULE HYBRIDE ET PROCÉDÉ DE RÉGLAGE D'UNE LIMITE DE PUISSANCE D'UN MOTEUR À COMBUSTION INTERNE D'UN VÉHICULE HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2019   DE 102019206127**

(43) Veröffentlichungstag der Anmeldung:
**11.11.2020   Patentblatt 2020/46**

(73) Patentinhaber: **Ford Global Technologies, LLC Dearborn, MI 48126 (US)**

(72) Erfinder:
• **Brinkmann, Bernd**
**41539 Dormagen (DE)**
• **Crisp, Nick Dashwood**
**Hadleigh, Essex SS7 2RJ (GB)**

(74) Vertreter: **Markowitz, Markus Ford-Werke GmbH Abt. NH/364 Henry-Ford-Straße 1 50735 Köln (DE)**

(56) Entgegenhaltungen:
WO-A1-2016/120201      DE-A1-102016 223 173
US-A1- 2017 050 633    US-A1- 2019 047 566

**Beschreibung**

Die vorliegende Erfindung betrifft ein Verfahren zum Anpassen einer Leistungsbegrenzung eines Verbrennungsmotors eines Hybridfahrzeugs. Die vorliegende Erfindung betrifft zudem ein Hybridfahrzeug, bei dem das Verfahren ausgeführt wird, um eine Leistungsbegrenzung eines Verbrennungsmotors des Hybridfahrzeugs anzupassen.

Ein Hybridfahrzeug, d. h. ein Hybridelektrokraftfahrzeug, ist ein Fahrzeug, dessen Antriebssystem als Energiewandler (mindestens) einen Elektromotor und einen anderen Energiewandler, hier einen Verbrennungsmotor, beispielsweise einen Ottomotor oder einen Dieselmotor, aufweist.

Moderne Kraftfahrzeuge haben häufig eine sehr hohe Leistungsfähigkeit, verbunden mit starker Wärmeentwicklung, bei gleichzeitig sehr kompakter Bauweise, d. h. enger, platzsparender Anordnung der Fahrzeugkomponenten im Motorraum und unter dem Fahrzeugboden. Zudem sind zur Einhaltung von reduzierten Emissionsgrenzwerten höhere Temperaturen im Auspuffsystem des Verbrennungsmotors erforderlich. Dies kann potenziell zu temperaturbedingt kritischen Situationen während der Fahrt, aber auch im Leerlauf führen. Insbesondere Hybridfahrzeuge können beim Betrieb ihres Verbrennungsmotors besonders hohe Temperaturen erzeugen, z. B. ohne Weiteres über 100 Grad Celsius mehr als nur mit Verbrennungsmotor angetriebene Fahrzeuge, beispielsweise weil Hybridfahrzeuge im Leerlauf oder Stillstand des Fahrzeugs eine große Leistung des Verbrennungsmotors abrufen, um einen dafür vorgesehenen Generator anzutreiben bzw. den Elektromotor als Generator zu betreiben, um z. B. die Batterie, d. h. den Akkumulator, also den elektrischen Energiespeicher, aufzuladen und um Hilfs- und Komfortsysteme des Fahrzeugs mit Energie zu versorgen, beispielsweise den Kompressor einer bordeigenen Klimaanlage. Zudem wird der Energiebedarf auch im Stillstand aufgrund zusätzlicher neuer Komfortfunktionen eher noch weiter ansteigen.

Um Schäden und Beeinträchtigungen durch Überhitzung von Komponenten bzw. Bereichen des Fahrzeugs zu vermeiden, kann beispielsweise zusätzliche Kühlung durch Ventilatoren erfolgen, deren Einsatz z. B. anhand von Messungen oder auf der Basis eines modellierten Temperaturverlaufs am Abgasstrang während Abkühlphasen des Verbrennungsmotors gesteuert werden könnte.

Allerdings erzeugt dies selbst zusätzlichen Energieverbrauch. Stattdessen kann auch versucht werden, den Bedarf an bereitzustellender Leistung für Komfortfunktionen oder das Aufladen der Batterie, d. h. des Akkumulators, des Hybridfahrzeugs zu reduzieren. Allerdings ist beispielsweise das Reduzieren der für die Klimaanlage bereitgestellten Leistung bei hohen Temperaturen, bei der dies die größte Auswirkung hätte, auch nachteilig, da aufgrund der geringeren Differenz zur Umgebungstemperatur eher Überhitzung einer Fahrzeugkomponente droht als bei niedrigeren Temperaturen. Alternativ oder zusätzlich könnte das Aufladen der Batterie begrenzt werden oder sogar ein Entladen in Kauf genommen werden. Allerdings ist eine Steuerung, wann welche Maßnahme geeignet ist und wann durch unnötige Begrenzung die verfügbare Leistung nicht optimal genutzt wird, auf der Basis von einzelnen Messungen beispielsweise der Temperatur am Abgasstrang des Verbrennungsmotors oft suboptimal.

So könnte zwar, anstatt zusätzlichen Energieverbrauch durch den Einsatz z. B. von Ventilatoren zu erzeugen, das Entstehen von Überhitzungssituationen durch Begrenzen der bereitgestellten Leistung des Verbrennungsmotors zu vermeiden oder zumindest zu reduzieren versucht werden, wobei eine Steuerung z. B. auch alleine auf der Basis des Temperaturverlaufs beispielsweise am Abgasstrang erfolgen könnte. Hierbei werden die Betriebsumstände des Fahrzeugs jedoch nur unzureichend erfasst, so dass es entweder dennoch zu Überhitzungsproblemen kommen würde, oder um eine ausreichende Sicherheit zu ermöglichen, der Motor zu oft, zu lange, zu stark oder anderweitig unnötig in seiner bereitgestellten Leistung begrenzt werden würde.

Die Patentschriften US 2019/047566 A1, DE 10 2016 223173 und US 2017/050633 A1 offenbaren das Begrenzen der maximal bereitgestellten Leistung eines Verbrennungsmotors in Abhängigkeit von diversen Parametern.

Der Erfindung liegt die Aufgabe zugrunde, eine effiziente Möglichkeit bereitzustellen, bei einem Hybridfahrzeug thermisch kritische Situationen zu vermeiden, ohne die Leistungsfähigkeit des Hybridfahrzeugs mehr als nötig zu reduzieren.

Diese Aufgabe wird erfindungsgemäß mit einem Verfahren zur Anpassen einer Leistungsbegrenzung eines Verbrennungsmotors eines Hybridfahrzeugs gemäß Anspruch 1, einem Hybridfahrzeug gemäß Anspruch 15 sowie einem Computerprogrammprodukt gemäß Anspruch 16 gelöst. Vorteilhafte Weiterbildungen der Erfindung sind in den Unteransprüchen angegeben.

Gemäß einem ersten Aspekt der Erfindung umfasst ein Verfahren zum Anpassen einer Leistungsbegrenzung eines Verbrennungsmotors eines Hybridfahrzeugs ein Erfassen einer aktuell bereitgestellten Leistung des Verbrennungsmotors P des Hybridfahrzeugs und einer aktuellen Fahrgeschwindigkeit V des Hybridfahrzeugs.

Zusätzlich erfolgt ein Erfassen einer Umgebungstemperatur $T_{env}$ des Hybridfahrzeugs und Ermitteln eines zugehörigen umgebungstemperaturbezogenen Gewichtungsfaktors Gt sowie ein Erfassen eines Luftdrucks $Pr_{env}$ in der Umgebung des Hybridfahrzeugs und Ermitteln eines zugehörigen luftdruckbezogenen Gewichtungsfaktors $G_p$.

Basierend darauf erfolgt ein Ermitteln eines Thermalbelastungsindikators STC in Abhängigkeit von einem Verhältnis $R_{pv}$ der erfassten aktuell bereitgestell-

ten Leistung P und der erfassten aktuellen Fahrgeschwindigkeit V sowie von dem umgebungstemperaturbezogenen Gewichtungsfaktor Gt, dem luftdruckbezogenen Gewichtungsfaktor $G_p$ und zusätzlich von einem karosseriebezogenen Gewichtungsfaktor $G_k$. In Abhängigkeit von dem ermittelten Thermalbelastungsindikator STC erfolgt dann ein Begrenzen einer maximal bereitgestellten Leistung Pmax des Verbrennungsmotors.

Das Erfassen der aktuell bereitgestellten Leistung des Verbrennungsmotors P erfolgt dabei vorzugsweise direkt am Verbrennungsmotor z. B. basierend auf einer Messung des Drehmoments und der Drehzahl einer direkt vom Motor angetriebenen Kurbelwelle. Wird mit dem Verbrennungsmotor ein Generator angetrieben, kann die bereitgestellte Leistung des Verbrennungsmotors auch indirekt als elektrische Ausgangsleistung des Generators erfasst werden, insbesondere wenn die gesamte Leistung des Verbrennungsmotors ausschließlich dem Antrieb des Generators dient. Dies ist beispielsweise bei Verbrennungsmotoren der Fall, die als Reichweitenverlängerer vorgesehen sind und die Reichweite des Elektroantriebs des Hybridfahrzeugs erhöhen, indem der angetriebene Generator eine Batterie, d. h. einen Akkumulator, und den Elektromotor des Hybridfahrzeugs mit elektrischer Leistung versorgt. Die aktuelle Fahrgeschwindigkeit V des Hybridfahrzeugs ist die Longitudinalgeschwindigkeit, mit der sich das Hybridfahrzeugs vorwärts bewegt, unabhängig davon, ob sich der Elektromotor, der Verbrennungsmotor oder alle Antriebseinheiten des Hybridfahrzeugs im Leerlauf befinden oder zum Antrieb des Hybridfahrzeugs beitragen. Die Höhe der bereitgestellten Leistung trägt wesentlich zum Ausmaß der durch den Betrieb des Verbrennungsmotors erzeugten Wärme bei. Gleichzeitig wird aber auch die Fähigkeit, Wärme durch Luftkühlung abzuführen, wesentlich durch die Höhe der Fahrgeschwindigkeit V und den somit möglichen Luftaustausch beeinflusst.

Die Wirkung des Luftaustauschs an den sich erwärmenden Fahrzeugkomponenten wird wiederum zusätzlich davon beeinflusst, welcher Temperaturunterschied zur Umgebungsluft besteht, was durch den umgebungstemperaturbezogenen Gewichtungsfaktor Gt berücksichtigt wird. Zudem beeinflusst auch die Höhe des Luftdruck Prenv in der Umgebung des Hybridfahrzeugs die Fähigkeit zum Wärmeaustausch, was durch den luftdruckbezogenen Gewichtungsfaktor $G_p$ berücksichtigt wird. Schließlich wird die Bauweise des Fahrzeugs berücksichtigt. Je nachdem, wie kompakt die wärmeführenden Komponenten verbaut sind und über welche Oberfläche Kühlung ermöglicht werden kann, führt ein Temperaturanstieg zu einer mehr oder weniger großen thermischen Belastung. Dieser Zusammenhang wird durch den zusätzlichen karosseriebezogenen Gewichtungsfaktor $G_k$ berücksichtigt.

Auf diese Weise wird sowohl der Betriebszustand als auch die von der Umgebung bestimmte Betriebssituation und auch die Bauweise des Hybridfahrzeugs beim Ermitteln des Thermalbelastungsindikators STC einbezogen, wobei berücksichtigt ist, dass die verschiedenen Faktoren sich auch gegenseitig in ihrer Bedeutung beeinflussen, was unberücksichtigt bliebe, wenn nur ein Parameter oder eine Komponente des Fahrzeugs, beispielsweise nur die Temperaturänderung im Abgassystem, berücksichtigt werden würde. Zudem kann so der Thermalbelastungsindikator STC (wobei STC für "Severe Temperature Condition" steht) für das Hybridfahrzeug zu jeder Zeit ermittelt werden, d. h. auch für Phasen, in denen der Verbrennungsmotor noch nicht oder nicht mehr in Betrieb ist. Somit steht ein Parameter zur Verfügung, der zur Steuerung verwendet werden kann, ob und in welchem Ausmaß die maximal bereitgestellte Leistung zu begrenzen ist, damit die einzelnen Komponenten innerhalb ihrer thermischen Grenzwerte bleiben.

Während das Erfassen von aktuellen Kennwerten des Hybridfahrzeugs und der Umgebung, beispielsweise der Fahrgeschwindigkeit V, der Umgebungstemperatur $T_{env}$ oder des Luftdrucks $Pr_{env}$, mit geeigneten Sensoren des Fahrzeugs erfolgt, werden die andere Schritte des Verfahrens, insbesondere das Ermitteln des Thermalbelastungsindikators STC, vorzugsweise von einer elektronischen Steuereinheit oder anderen programmierbaren Einrichtung zumindest mit einem Speicher und einem Prozessor als computerimplementierte Verfahrensschritte durchgeführt, wobei der Speicher Programmcode enthält, der, wenn er von dem Prozessor geladen und ausgeführt wird, den Prozessor veranlasst, die entsprechenden Verfahrensschritte auszuführen.

Das Ermitteln des Thermalbelastungsindikators STC erfolgt vorzugsweise kontinuierlich oder in regelmäßigen Intervallen, so dass auch die Begrenzung der maximal bereitgestellten Leistung $P_{max}$ entsprechend aktualisiert werden kann. Eine Funktion bzw. Zuordnungsvorschrift, mit der STC-Werten geeignete $P_{max}$—Werte zugeordnet werden, kann in einer beispielhaften Ausführungsform aufgrund von Testreihen individuell für den Hybridfahrzeugtyp ermittelt werden. In einer weiteren Ausführungsform ist es vorgesehen, dass $P_{max}$ linear abhängig ist von der Quadratwurzel des Mittelwerts der Summe der Quadrate der STC-Werte über ein Zeitfenster bestimmter Länge (d. h. RMS-Bildung (RMS, Root Mean Square)). In ähnlicher Weise kann auch eine Batteriestrombegrenzung eines Hybridfahrzeugs bestimmt werden. Zur Ermittlung von $P_{max}$ ist in einer Ausführungsform vorgesehen, eine Lookup-Tabelle zu verwenden, in der die Zuordnung von $P_{max}$ -Werten zu STC-Werten gespeichert ist.

Wird im Betrieb ein neuer Wert für die zulässige maximal bereitgestellte Leistung $P_{max}$ ermittelt, den der bisherige Wert für $P_{max}$ überschreitet, ist es vorgesehen, dass die aktuell bereitgestellte Leistung P reduziert wird, bis diese nicht mehr als die neu ermittelte zulässige maximal bereitgestellte Leistung $P_{max}$ beträgt.

In einer Ausführungsform ist es vorgesehen, auch aktive Kühlmaßnahmen in Abhängigkeit vom ermittelten Thermalbelastungsindikator STC zu steuern. In einer beispielhaften Ausführungsform ist es vorgesehen, einen Aktivierungszeitpunkt und/oder eine Aktivierungsdauer und/oder eine Rotationsgeschwindigkeit von einem oder mehreren Ventilatoren eines Kühlsystems für Komponenten des Hybridfahrzeugs in Abhängigkeit vom Verlauf des STC-Werts anzupassen bzw. zu steuern. Dies kann beispielsweise zumindest in einer Abkühlungsphase des Verbrennungsmotors erfolgen.

In einer bevorzugten Ausführungsform des Verfahrens zum Anpassen einer Leistungsbegrenzung eines Verbrennungsmotors eines Hybridfahrzeugs umfasst das Ermitteln des Thermalbelastungsindikators STC, STC als STC = $R_{pv}$ * $G_k$ * Gt * $G_p$ zu ermitteln, d. h. als das Verhältnis $R_{pv}$ der erfassten aktuell bereitgestellten Leistung P und der erfassten aktuellen Fahrgeschwindigkeit V gewichtet mit dem Produkt des umgebungstemperaturbezogenen Gewichtungsfaktors Gt, des luftdruckbezogenen Gewichtungsfaktors $G_p$ und des karosseriebezogenen Gewichtungsfaktor $G_k$.

In einer Ausführungsform des Verfahrens umfasst das Ermitteln des Verhältnisses $R_{pv}$ der erfassten aktuell bereitgestellten Leistung P, angegeben in Kilowatt, und der erfassten aktuellen Fahrgeschwindigkeit V, angegeben in Kilometer pro Stunde, $R_{pv}$ als $R_{pv}$ = $P^{K1}$/(V-K2), zumindest wenn V größer oder gleich einer unteren Grenzgeschwindigkeit $V_{th}$ ist, zu ermitteln, wobei K1 ein erster konstanter Faktor in einem Bereich von 1 bis 2 und K2 ein zweiter konstanter Faktor größer 0 und kleiner als $V_{th}$ und angegeben in Kilometer pro Stunde, sind.

K1 gewichtet den Einfluss der aktuell bereitgestellten Leistung des Verbrennungsmotors. Dabei wird berücksichtigt, dass hohe Leistungen hohe Temperaturen verursachen, wobei sich ein bereits erwärmtes System überproportional stärker weiter erwärmt, wenn die bereitgestellte Leistung weiter erhöht wird. In einer beispielhaften Ausführungsform beträgt der erste konstante Faktor K1 = 1,6, d. h. es wird die fünfte Wurzel aus der achten Potenz gebildet. In einer bevorzugten Ausführungsform ist es vorgesehen, anstatt $P^{K1}$ aktuell zu berechnen, für den gewählten ersten konstanten Faktor K1, z. B. 1,6, eine Lookup-Tabelle vorzusehen, in der die Zuordnung von $P^{K1}$—Werten zu P-Werten gespeichert ist.

K2 beschreibt eine obere Grenze eines Geschwindigkeitsbereiches, in dem sich das Hybridfahrzeug in einer sehr langsamen Fahrt befindet und der Einfluss der gefahrenen Geschwindigkeit auf die Luftkühlung nur noch sehr gering ist. $V_{th}$ legt daher einen unteren Grenzwert oberhalb von K2 für die Fahrgeschwindigkeit fest, bis zu der der Einfluss der Fahrgeschwindigkeit wie angegeben berücksichtigt wird. In anderen Ausführungsformen werden eine oder mehrere der angegebenen Einheiten anders gewählt. Dann ändern sich ggf. entsprechend auch die Wertebereiche der Konstanten. Für eine Vergleichbarkeit wird zuvor in die hier angegebenen Einheiten umgerechnet.

In einer beispielhaften Ausführungsform umfasst das Ermitteln des Verhältnisses $R_{pv}$ der erfassten aktuell bereitgestellten Leistung P und der erfassten aktuellen Fahrgeschwindigkeit V, $R_{pv}$ als $R_{pv}$ = $P^{K1}$/(MAX(V, $V_{th}$)-K2) zu ermitteln. Vorgesehen ist also ein Clippen der Geschwindigkeit V auf $V_{th}$, so dass der Nenner von $R_{pv}$ auch bei Schrittgeschwindigkeit oder auch bei Stillstand des Hybridfahrzeugs nie kleiner als $V_{th}$-K2 werden kann und z. B. auch Messungenauigkeiten nicht zu einer Division durch Null bzw. stark verfälschten Werten für $R_{pv}$ führen können. In dieser oder einer weiteren Ausführungsform kann der zweite konstante Faktor K2 beispielsweise 15 Kilometer pro Stunde betragen. $V_{th}$ wird dann als mindestens 16 Kilometer pro Stunde, vorzugsweise 17 Kilometer pro Stunde, gewählt. In noch einer weiteren Ausführungsform wird $V_{th}$ nicht gewählt, sondern in Abhängigkeit von K2 festgelegt, beispielsweise $V_{th}$ = K2 + 2 oder $V_{th}$ = K2 * 2, jeweils in Kilometer pro Stunde.

In einer bevorzugten Ausführungsform hängt der karosseriebezogene Gewichtungsfaktor von einer Oberfläche eines Frontbereichs des Hybridfahrzeugs ab. Der Frontbereich ist der Bereich vor der Fahrgastzelle des Hybridfahrzeugs, also bei vielen Fahrzeugen der Bereich, in dem sich auch die Motorhaube des Fahrzeugs befindet; wobei die Oberfläche des Frontbereich immer mit mindestens einem Quadratmeter angenommen wird, selbst wenn der Motor bzw. die Motoren unter der Fahrgastzelle oder dahinter angeordnet sind. Der Begriff Oberfläche schließt alle Oberflächen mit ein, also beispielsweise auch seitliche Oberflächen. Die Oberfläche des Frontbereichs stellt einen Indikator für die Art und Kompaktheit der Bauweise des Antriebssystems des Fahrzeugs und somit auch für dessen Erwärmungs- und Abkühlungsverhalten dar, wobei eine näherungsweise Bestimmung der Oberfläche mit einfachen Mitteln feststellbar ist und ein tatsächliches Feststellen des Temperaturverhaltens der sich erhitzenden und wieder abkühlenden Komponenten unter der Oberfläche vermieden werden kann. In einer bevorzugten beispielhaften Ausführungsform beträgt der karosseriebezogene Gewichtungsfaktor $G_k$ = 1/A, wobei A angegeben in Quadratmeter eine Konstante im Bereich von 1 bis 10 ist. Je größer also die Oberfläche A ist, desto geringer ist der Einfluss des Aufbaus auf die Thermalbelastung des Hybridfahrzeugs.

In einer Ausführungsform umfasst das Ermitteln des umgebungstemperaturbezogenen Gewichtungsfaktors Gt, diesen als Gt = $((T_{env}+40)/K3)^2$ zu ermitteln, wobei $T_{env}$ die Umgebungstemperatur in Grad Celsius und K3 ein dritter konstanter Faktor größer als 60 und kleiner als 80 ist. Der Einfluss der Umgebungstemperatur auf die Thermalbelastung des Fahrzeugs wächst quadratisch mit dem Anstieg der Temperatur, wobei K3 beispielsweise in einem Bereich liegt, der vorzugsweise über dem Doppelten der Temperatur eines warmen Sommertags in der Region entspricht, in der das Hybridfahrzeug betrieben wird. In einer beispielhaften Ausführungsform beträgt der dritte konstante Faktor K3 = 70.

In einer Ausführungsform des Verfahrens umfasst das Ermitteln des luftdruckbezogenen Gewichtungsfaktors $G_p$, diesen als $G_p = K4/Pr_{env}$ zu ermitteln, wobei $Pr_{env}$ der Luftdruck in der Umgebung des Hybridfahrzeugs in Millibar und K4 ein vierter konstanter Faktor größer als 900 und kleiner als 1100 ist. $G_p$ und damit dessen Einfluss auf die Höhe des Thermalbelastungsindikators STC wächst mit abnehmendem Luftdruck $Pr_{env}$. Dies berücksichtigt, dass Abkühlung durch Wärmeaustausch mit der Umgebungsluft bei geringerem Luftdruck schwerer ist bzw. länger dauert. Typischerweise sieht das Verfahren zusätzlich eine Überprüfung vor, mit der sehr kleine Werte von $Pr_{env}$ oder der Wert Null verhindert werden, da diese Werte eher auf eine Fehlfunktion des Sensors als auf geringen Luftdruck hinweisen. In einer beispielhaften Ausführungsform beträgt der vierte konstante Faktor K4 = 995 (in Millibar) und somit geringfügig weniger als der mittlere Luftdruck der Atmosphäre auf Meereshöhe. Ein Millibar entspricht einem Hektopascal.

In einer bevorzugten Ausführungsform umfasst das Ermitteln des Thermalbelastungsindikators STC ein Mittelwert-Filtern, bei dem der Thermalbelastungsindikator STC durch gleitende Mittelwertbildung über ein Zeitfenster gefiltert wird. Die Zeitkonstante, d. h. die Länge des Zeitfensters, über das gemittelt wird, wird vorzugsweise in einem Bereich von 60 bis 900 Sekunden gewählt, beispielsweise 180 Sekunden. Dabei wird für STC kontinuierlich oder beispielsweise in einem Takt von z. B einer Sekunde der Mittelwert über das Zeitfenster bestimmt. Werte für den gefilterten Thermalbelastungsindikator liegen beispielsweise in einem Bereich von 1 bis 10, wobei höhere Werte eine höhere thermische Belastung repräsentieren und somit schlechter als niedrige Werte sind. Es handelt sich beim STC-Wert um eine Energiedichte-Angabe. In einem weiteren Beispiel ist es vorgesehen, ab einem Grenzwert für den Thermalbelastungsindikator STC zusätzlich eine Warnung an den Fahrer auszugeben, beispielsweise visuell über eine Anzeige am Armaturenbrett oder als Audiosignal, wobei die Warnung mit einer automatischen Reduzierung der aktuellen Leistung P des Verbrennungsmotors verbunden sein kann.

Zusätzlich kann beim Begrenzen der maximal bereitgestellten Leistung in Abhängigkeit vom Thermalbelastungsindikator STC die Tendenz der Änderung des Thermalbelastungsindikators STC berücksichtigt werden, wobei ein Ansteigen des STC-Werts vorzugsweise anders bewertet wird als ein Abfallen.

In einem weiteren Beispiel wird das Mittelwert-Filtern sowohl während der Verbrennungsmotor eingeschaltet als auch ausgeschaltet ist fortgesetzt. Auf diese Weise wird der Thermalbelastungsindikator STC fortlaufend nachgeführt und aktualisiert, auch beispielsweise in Nachlauf- und Abkühlphasen.

In einem weiteren Beispiel des Verfahrens umfasst das Verfahren außerdem ein Begrenzen der aktuell bereitgestellten Leistung P des Verbrennungsmotors in Abhängigkeit von einem zugelassenen oberen Grenzwert für die aktuelle Fahrgeschwindigkeit V des Hybridfahrzeugs. Das Begrenzen der aktuell bereitgestellten Leistung P erfolgt hier nicht nur in Abhängigkeit vom Thermalbelastungsindikator STC, sondern zusätzlich auch in Abhängigkeit von der gefahrenen aktuellen Fahrgeschwindigkeit V. Dabei wird auch bei Überschreiten des eingestellten, zugelassenen oberen Grenzwerts für V die Leistung P begrenzt. In einem weiteren Beispiel umfasst das Begrenzen einer maximal bereitgestellten Leistung des Verbrennungsmotors, einen Einfluss der aktuellen Fahrgeschwindigkeit V des Hybridfahrzeugs auf die maximal bereitgestellte Leistung des Verbrennungsmotors mit zunehmender aktueller Fahrgeschwindigkeit V zusätzlich vergrößern. Auf diese Weise wird berücksichtigt, dass bei sehr hohen Geschwindigkeiten die Temperaturen schnell stark ansteigen, was durch direktes bzw. stärkeres Berücksichtigen der Geschwindigkeit ggf. schneller erkannt und reduziert werden kann als durch ausschließliches Berücksichtigen des STC-Werts. So wird für geringere Geschwindigkeiten stärker die Gesamtsituation des Fahrzeugs berücksichtigt, so dass möglichst vermieden werden kann, die Leistung unnötig zu reduzieren, während bei hohen Geschwindigkeiten die Temperaturbelastung schnell und effektiv durch eine Begrenzung der Leistung verringert werden kann.

In einem weiteren Beispiel umfasst das Verfahren außerdem ein Begrenzen einer über einen vom Verbrennungsmotor betriebenen Generator des Hybridfahrzeugs bereitgestellten elektrischen Leistung. So kann für die Empfangseinheiten der elektrischen Leistung direkt die bereitgestellte Leistung begrenzt werden. Eine Empfangseinheit für elektrische Leistung ist dabei insbesondere ein Verbraucher von elektrische Energie, beispielsweise die Klimaanlage oder ein Gleichstromwandler, der z. B. andere Komfortsysteme versorgt, aber auch die Batterie des Hybridfahrzeugs, die durch den Betrieb des Verbrennungsmotors aufgeladen werden soll.

In einem weiteren Beispiel stellt der Generator dabei die elektrische Leistung einer Mehrzahl von Empfangseinheiten bereit und das Begrenzen der bereitgestellten elektrischen Leistung umfasst, nur eine Gesamtsumme der für die Mehrzahl von Empfangseinheiten bereitgestellten elektrischen Leistung zu begrenzen. So kann die Nutzung der bereitgestellten Leistung P verbessert werden. Erfordern die Komfortsysteme aktuell weniger Leistung, kann diese zusätzlich für das Aufladen der Batterie, d. h. des Akkumulators, verwendet werden. In einem weiteren Beispiel ist vorgesehen, zusätzlich eine gewünschte Minimalladung der Batterie aufrecht zu erhalten, ggf. auch auf Kosten der für andere Empfangseinheiten verfügbaren Leistung.

In einer weiteren Ausführungsform umfasst das Verfahren außerdem ein Erfassen einer Kühlmitteltemperatur des Hybridfahrzeugs und Begrenzen der maximal bereitgestellten Leistung des Verbrennungsmotors auch in Abhängigkeit von der erfassten Kühlmitteltemperatur und/oder ein Erfassen eines Drehmoments des Verbrennungsmotors und Begrenzen der maximal bereitgestellten Leistung des Verbrennungsmotors auch in Abhängigkeit von dem erfassten Drehmoment. Messwerte für die Kühlmitteltemperatur und/oder das Drehmoment stehen ggf. bereits zur Verfügung, da diese Parameter möglicherweise bereits für eine Steuerung von Ventilatoren zur Kühlung verwendet werden.

In einem weiteren Beispiel umfasst das Verfahren außerdem ein erfassen einer Temperatur (EPAS-Temperatur) an einer elektrisch betriebenen Servolenkung (EPAS, Electrical Power Assisted Steering) und Begrenzen der maximal bereitgestellten Leistung des Verbrennungsmotors auch in Abhängigkeit von der erfassten EPAS-Temperatur. Dies bietet den Vorteil, dass die E-PAS-Temperatur bereits über ein bordeigenenes Netzwerk des Hybridfahrzeug, z. B. den CAN-Bus (CAN, Controller Area Network) abrufbar sein kann.

In noch einem weiteren Beispiel wird zusätzlich berücksichtigt, ob es in ein einem kurzen Überwachungszeitraum einen großen Anstieg der abgerufenen Leistung gab (beispielsweise Summierung über ein gleitendes Zeitfenster).

Gemäß einem zweiten Aspekt der Erfindung umfasst ein Hybridfahrzeug einen Akkumulator, einen Elektromotor, verbunden mit dem Akkumulator und eingerichtet zum Antreiben des Hybridfahrzeugs, einen Generator, verbunden mit dem Akkumulator, einen Verbrennungsmotor, verbunden zumindest mit dem Generator und eingerichtet zumindest zum Betreiben des Generators zum Aufladen des Akkumulators, eine Mehrzahl von Sensoren zumindest zum Erfassen einer aktuell bereitgestellten Leistung des Verbrennungsmotors P, einer aktuellen Fahrgeschwindigkeit V des Hybridfahrzeugs, einer Umgebungstemperatur $T_{env}$ des Hybridfahrzeugs und eines Luftdrucks $Pr_{env}$ in der Umgebung des Hybridfahrzeugs, und eine elektronische Steuereinheit, dadurch gekennzeichnet, dass die elektronische Steuereinheit dazu eingerichtet ist, ein Verfahren gemäß dem ersten Aspekt der Erfindung durchzuführen. Dabei umfasst das Durchführen der Schritte des Verfahrens, diese entweder selbst durch die elektronische Steuereinheit durchzuführen oder andere Komponenten des Hybridfahrzeugs dazu zu veranlassen den jeweiligen Schritt durchzuführen, beispielsweise mit den Sensoren Sensorsignale zu erfassen. Somit werden die Vorteile und Besonderheiten des erfindungsgemäßen Verfahrens zum Anpassen einer Leistungsbegrenzung eines Verbrennungsmotors eines Hybridfahrzeugs auch im Rahmen eines Hybridfahrzeugs umgesetzt.

Die elektronische Steuereinheit ist eine programmierbare Einrichtung zumindest mit einem Speicher und einem Prozessor, wobei im Speicher Codeanteile abgelegt sind, die, wenn sie vom Prozessor geladen und ausgeführt werden, den Prozessor veranlassen, die Steuerung des Verfahrens etc. durchzuführen. Außerdem können im Speicher beispielsweise auch die Konstanten K1 bis K4, ggf. $V_{th}$, und eine geeignete Zuordnungsvorschrift bzw. Zuordnungstabelle (d. h. Lookup-Tabelle) zum schnellen Zuordnen von $P_{max}$-Werten zu STC-Werten sowie ggf. eine Zuordnungstabelle von $P^{K1}$—Werten zu P-Werten abgelegt sein. In einer Ausführungsform ist zudem eine Benutzerschnittstelle vorgesehen, über die ein Benutzer, z. B: der Fahrer des Hybridfahrzeugs oder ein Werkstattmitarbeiter, die Konstanten und ggf. auch die Zuordnungsvorschrift selbst konfigurieren und verändern kann.

In einem weiteren Beispiel verfügt das Hybridfahrzeug insbesondere über eine oder mehrere zusätzliche Leistungsempfangseinheiten, die auch bei Stillstand des Fahrzeugs eine Versorgung mit elektrischer Leistung erfordern. In einer beispielhaften Ausführungsform verfügt das Hybridfahrzeug über eine Powerto-the-Box-Funktion, bei der das Hybridfahrzeug die Energie liefert, um weitere Stromverbraucher mit elektrischer Energie zu versorgen, die beispielsweise über an der Karosserie bereitgestellte Stromanschlüsse mit dem Stromnetz des Fahrzeugs verbunden werden. Je nach Höhe der abgerufenen elektrischen Leistung kann dies unter Umständen eine hohe Belastung des Verbrennungsmotors zur Folge haben, um über den Betrieb des Generators genug elektrische Energie zu erzeugen, ohne die Fahrzeugbatterie (zu stark) zu entladen. Beispielsweise kann vorgesehen sein, über die Power-to-the-Box-Funktion bis zu 8 Kilowatt elektrische Leistung bereitzustellen, was auch im Stillstand eine entsprechend hohe Leistung des Verbrennungsmotors erfordert und zu entsprechender Wärmeentwicklung und Ansteigen des Thermalbelastungsindikator STC führt.

Gemäß einem dritten Aspekt der Erfindung umfasst ein Computerprogrammprodukt Codeanteile zum Ausführen von Schritten eines Verfahrens gemäß dem ersten Aspekt der Erfindung, wenn sie auf einer programmierbaren Einrichtung ausgeführt werden. Somit werden die Vorteile und Besonderheiten des erfindungsgemäßen Verfahrens zum Anpassen einer Leistungsbegrenzung eines Verbrennungsmotors eines Hybridfahrzeugs auch im Rahmen eines geeigneten Computerprogrammprodukts umgesetzt.

Weitere Vorteile der vorliegenden Erfindung sind aus der detaillierten Beschreibung und den Abbildungen ersichtlich. Die Erfindung wird nachstehend auch im Zusammenhang mit der folgenden Beschreibung von Ausführungsbeispielen mit Bezug auf die begleitenden Abbildungen näher erläutert. Es zeigen:

Fig. 1 eine schematische Darstellung eines Verfahrens zum Anpassen einer Leistungsbegrenzung eines Verbrennungsmotors eines Hybridfahrzeugs gemäß einer ersten Ausführungsform der Erfindung; und

Fig. 2 eine schematische Darstellung eines Hybridfahrzeugs gemäß einer zweiten Ausführungsform der Erfindung.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der vorstehend und nachstehend beschriebenen verschiedenen beispielhaften Ausführungsformen miteinander kombiniert werden können, sofern nicht spezifisch anders angegeben. Die Beschreibung ist deshalb nicht in einschränkendem Sinne aufzufassen, und der Schutzumfang der vorliegenden Erfindung wird durch die angefügten Ansprüche definiert.

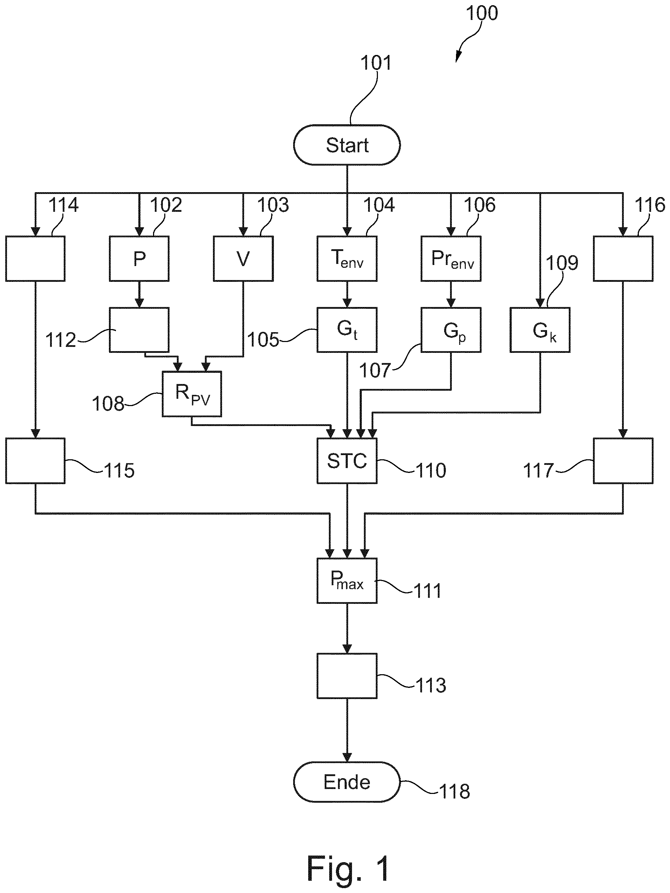

In Fig. 1 wird eine schematische Darstellung eines Beispiels eines Verfahrens zum Anpassen einer Leistungsbegrenzung eines Verbrennungsmotors eines Hybridfahrzeugs gemäß einer ersten Ausführungsform der Erfindung gezeigt. In der gezeigten Ausführungsform umfasst das Verfahren 100 nach einem Startzustand 101 ein Erfassen 102 einer aktuell bereitgestellten Leistung des Verbrennungsmotors P des Hybridfahrzeugs und ein Erfassen 103 einer aktuellen Fahrgeschwindigkeit V des Hybridfahrzeugs. Außerdem erfolgt ein Erfassen 104 einer Umgebungstemperatur $T_{env}$ des Hybridfahrzeugs und Ermitteln 105 eines zugehörigen umgebungstemperaturbezogenen Gewichtungsfaktors Gt. Zudem erfolgt ein Erfassen 106 eines Luftdrucks $Pr_{env}$ in der Umgebung des Hybridfahrzeugs und Ermitteln 107 eines zugehörigen luftdruckbezogenen Gewichtungsfaktors $G_p$.

Es folgt ein Ermitteln 108 von einem Verhältnis $R_{pv}$ der erfassten aktuell bereitgestellten Leistung P und der erfassten aktuellen Fahrgeschwindigkeit V. Außerdem erfolgt ein Ermitteln 109 eines karosseriebezogenen Gewichtungsfaktors $G_k$, wobei es sich bei $G_k$ um eine durch den Aufbau des Hybridfahrzeugs vorgegebene Konstante handelt, so dass das Ermitteln auch in einem Einlesen von $G_k$ aus einem Speicher handeln kann.

Basierend darauf erfolgt dann ein Ermitteln 110 eines Thermalbelastungsindikators STC in Abhängigkeit von dem Verhältnis $R_{pv}$ der erfassten aktuell bereitgestellten Leistung P und der erfassten aktuellen Fahrgeschwindigkeit V sowie von dem umgebungstemperaturbezogenen Gewichtungsfaktor Gt, dem luftdruckbezogenen Gewichtungsfaktor $G_p$ und zusätzlich von dem karosseriebezogenen Gewichtungsfaktor $G_k$. In Abhängigkeit von dem ermittelten Thermalbelastungsindikator STC erfolgt dann ein Begrenzen 111 einer maximal bereitgestellten Leistung $P_{max}$ des Verbrennungsmotors.

In der gezeigten Ausführungsform erfolgt das Ermitteln 110 des Thermalbelastungsindikators als STC = $R_{pv}$ * $G_k$ * Gt * $G_p$, d. h. als das Verhältnis $R_{pv}$ der erfassten aktuell bereitgestellten Leistung P und der erfassten aktuellen Fahrgeschwindigkeit V gewichtet mit dem Produkt des umgebungstemperaturbezogenen Gewichtungsfaktors Gt, des luftdruckbezogenen Gewichtungsfaktors $G_p$ und des karosseriebezogenen Gewichtungsfaktor $G_k$. Dabei wird das Verhältnis $R_{pv}$ als $R_{pv}$ = $P^{K1}$/(V-K2) mit K1 = 1,6 und K2 = 15 km/h bzw. in einer bevorzugten Ausführungsform als $R_{pv}$ = $P^{K1}$/(MAX(V, $V_{th}$)-K2) mit K1 = 1,6, $V_{th}$ = 17 km/h und K2 = 15 km/h ermittelt. Der karosseriebezogene Gewichtungsfaktor

$G_k$ wird als $G_k$ = 1/A bestimmt, wobei A, angegeben in Quadratmeter, eine Oberfläche eines Frontbereichs des Hybridfahrzeugs darstellt und je nach Aufbau des Fahrzeugs ausgewählt ist aus einem Bereich von 1 bis 10. Der umgebungstemperaturbezogene Gewichtungsfaktor Gt wird als Gt = $((T_{env}+40)/K3)^2$ ermittelt, wobei $T_{env}$ die Umgebungstemperatur (in Grad Celsius) und K3 = 70 ist, und der luftdruckbezogene Gewichtungsfaktor $G_p$ als $G_p$ = K4/$Pr_{env}$ ermittelt wird, wobei $Pr_{env}$ der Luftdruck in der Umgebung des Hybridfahrzeugs in Millibar und K4 = 995 beträgt (in Millibar). In der gezeigten Ausführungsform wird der Thermalbelastungsindikator daher ermittelt als

$$STC = \frac{P^{1,6}}{V-15} * \frac{1}{A} * \left(\frac{T_{env}+40}{70}\right)^2 * \frac{995}{Pr_{env}}$$

mit Zahlenangaben, die P in Kilowatt, V in Kilometer pro Stunde, A in Quadratmeter, $T_{env}$ in Grad Celsius und $Pr_{env}$ in Millibar entsprechen.

Um zu große Änderungen des Thermalbelastungsindikators STC zu filtern, umfasst das Ermitteln 110 des Thermalbelastungsindikators STC in der gezeigten Ausführungsform außerdem, den Thermalbelastungsindikator durch gleitende Mittelwertbildung über ein Zeitfenster zu filtern. Das Zeitfenster hat dabei beispielsweise die Länge 180 Sekunden.

In der gezeigten Ausführungsform erfolgt nach dem Erfassen 102 der aktuell bereitgestellten Leistung P zudem ein Begrenzen 112 der aktuell bereitgestellten Leistung P des Verbrennungsmotors in Abhängigkeit von einem zugelassenen oberen Grenzwert für die aktuelle Fahrgeschwindigkeit V des Hybridfahrzeugs. Der zugelassene obere Grenzwert ist dabei beispielsweise durch die maximale thermale Belastbarkeit des Hybridfahrzeugs oder einer einzelnen Komponente davon bestimmt, kann aber auch z. B. durch die ggf. darunter liegende zulässige Höchstgeschwindigkeit für die befahrene Straße bestimmt sein.

Zusätzlich zum Begrenzen 111 der maximal bereitgestellten Leistung $P_{max}$ des Verbrennungsmotors ist in der gezeigten Ausführungsform auch ein Begrenzen 113 einer über einen vom Verbrennungsmotor betriebenen Generator des Hybridfahrzeugs bereitgestellten elektrischen Leistung vorgesehen.

In der gezeigten Ausführungsform des Verfahrens ist zudem vorgesehen, die maximal bereitgestellte Leistung $P_{max}$ nicht nur in Abhängigkeit vom ermittelten Thermalbelastungsindikator STC zu begrenzen, sondern außerdem ein Erfassen 114 einer Kühlmitteltemperatur des Hybridfahrzeugs und Begrenzen 115 der maximal bereitgestellten Leistung des Verbrennungsmotors auch in Abhängigkeit von der erfassten Kühlmitteltemperatur und ein Erfassen 116 eines Drehmoments des Verbrennungsmotors und Begrenzen 117 der maximal bereitgestellten Leistung des Verbrennungsmotors auch in Abhängigkeit von dem erfassten Drehmoment durchzuführen.

Nach dem Begrenzen 111 der maximal bereitgestellten Leistung und dem Begrenzen der bereitgestellten elektrischen Leistung 113 endet das Verfahren in einem Endzustand 118, wobei in der Regel das Verfahren während des Betriebs des Hybridfahrzeugs sofort wieder neu gestartet wird und so eine fortlaufende Anpassung bzw. Kalibrierung der maximal bereitgestellten Leistung an die sich ggf. ändernden Betriebsumstände umgesetzt wird.

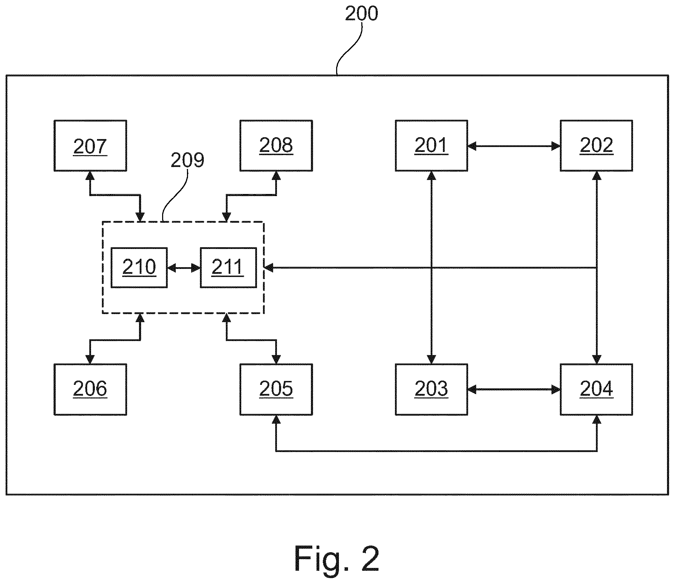

In Fig. 2 wird eine schematische Darstellung eines Beispiels eines Hybridfahrzeugs gemäß einer zweiten Ausführungsform der Erfindung gezeigt. Das Hybridfahrzeug 200 weist einen Akkumulator 201 und einen Elektromotor 202 auf, der mit dem Akkumulator 201 verbunden ist und eingerichtet ist zum Antreiben des Hybridfahrzeugs 200. Zudem umfasst das Hybridfahrzeug 200 einen Generator 203, der mit dem Akkumulator 201 verbunden ist, und einen Verbrennungsmotor 204, der zumindest mit dem Generator 203 verbunden ist und zumindest eingerichtet ist, den Generator 203 anzutreiben, um den Akkumulator 201 aufzuladen.

Außerdem verfügt das Hybridfahrzeug 200 über eine Mehrzahl von Sensoren 205, 206, 207, 208. Der erste Sensor 205, d. h. die erste Sensoreinheit, ist ausgelegt zum Erfassen einer aktuell bereitgestellten Leistung P des Verbrennungsmotors 204. Der zweite Sensor 206 ist ausgelegt zum Erfassen einer aktuellen Fahrgeschwindigkeit V des Hybridfahrzeugs 200. Der dritte Sensor 207 ist ausgelegt zum Erfassen einer Umgebungstemperatur $T_{env}$ des Hybridfahrzeugs 200, und der vierte Sensor 208 ist ausgelegt zum Erfassen eines Luftdrucks $Pr_{env}$ in der Umgebung des Hybridfahrzeugs 200.

Zudem verfügt das Hybridfahrzeug 200 über eine elektronische Steuereinheit 209, die mit den Sensoren 205, 206, 207, 208 und den weiteren Fahrzeugkomponenten direkt oder indirekt kommunikativ verbunden ist, beispielsweise über ein bordeigenes Netzwerk. Die elektronische Steuereinheit 209 ist dazu eingerichtet, ein Verfahren gemäß dem ersten Aspekt der Erfindung durchzuführen. Dabei werden die Schritte des Verfahrens entweder selbst durch die elektronische Steuereinheit 209 durchgeführt oder andere Komponenten des Hybridfahrzeugs 200 gesteuert, den jeweiligen Schritt durchzuführen. Hierzu ist die elektronische Steuereinheit 209 als programmierbare Einrichtung zumindest mit einem Speicher 210 und einem Prozessor 211 ausgelegt, wobei im Speicher 210 Codeanteile abgelegt sind, die, wenn sie vom Prozessor 211 geladen und ausgeführt werden, die elektronische Steuereinheit 209 veranlassen, die Steuerung des Verfahrens durchzuführen.

Es versteht sich, dass Verfahrensschritte, obwohl gemäß einer gewissen geordneten Reihenfolge beschrieben, zum Teil in einer anderen als der hier beschriebenen Reihenfolge ausgeführt werden könnten. Es versteht sich weiterhin, dass gewisse Schritte gleichzeitig oder nacheinander, einfach oder mehrfach durchgeführt werden können, dass andere Schritte hinzugefügt werden könnten oder dass gewisse, hier beschriebene Schritte weggelassen werden könnten. Mit anderen Worten: Es werden die vorliegenden Beschreibungen zum Zwecke der Veranschaulichung bestimmter Ausführungsformen bereitgestellt und sollten nicht als Beschränkung des offenbarten Gegenstands aufgefasst werden.

Die Figuren sind nicht notwendigerweise detailgetreu und maßstabsgetreu und können vergrößert oder verkleinert dargestellt sein, um einen besseren Überblick zu bieten. Daher sind hier offenbarte funktionale Einzelheiten nicht einschränkend zu verstehen, sondern lediglich als anschauliche Grundlage, die dem Fachmann auf diesem Gebiet der Technik Anleitung bietet, um die vorliegende Erfindung auf vielfältige Weise einzusetzen.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elementen verwendet werden. Wird beispielsweise eine Zusammensetzung beschrieben, dass sie die Komponenten A, B und/oder C, enthält, kann die Zusammensetzung A alleine; B alleine; C alleine; A und B in Kombination; A und C in Kombination; B und C in Kombination; oder A, B, und C in Kombination enthalten.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Die Erfindung soll daher nicht auf einzelne Ausführungsformen beschränkt sein, sondern lediglich durch die beigefügten Ansprüche.

Bezugszeichenliste

100   Verfahren zum Anpassen einer Leistungsbegrenzung eines Verbrennungsmotors eines Hybridfahrzeugs
101   Startzustand
102   Erfassen einer aktuell bereitgestellten Leistung
103   Erfassen einer aktuellen Fahrgeschwindigkeit
104   Erfassen einer Umgebungstemperatur
105   Ermitteln eines umgebungstemperaturbezogenen Gewichtungsfaktors
106   Erfassen eines Luftdrucks in der Umgebung des Hybridfahrzeugs
107   Ermitteln eines luftdruckbezogenen Gewichtungsfaktors
108   Ermitteln von einem Verhältnis der erfassten aktuell bereitgestellten Leistung und der erfassten aktuellen Fahrgeschwindigkeit
109   Ermitteln eines karosseriebezogenen Gewichtungsfaktors

110 Ermitteln eines Thermalbelastungsindikators

111 Begrenzen einer maximal bereitgestellten Leistung

112 Begrenzen der aktuell bereitgestellten Leistung

113 Begrenzen einer bereitgestellten elektrischen Leistung

114 Erfassen einer Kühlmitteltemperatur

115 Begrenzen der maximal bereitgestellten Leistung auch in Abhängigkeit von der erfassten Kühlmitteltemperatur

116 Erfassen eines Drehmoments

117 Begrenzen der maximal bereitgestellten Leistung auch in Abhängigkeit von dem erfassten Drehmoment

118 Endzustand

200 Hybridfahrzeug

201 Akkumulator

202 Elektromotor

203 Generator

204 Verbrennungsmotor

205 erster Sensor

206 zweiter Sensor

207 dritter Sensor

208 vierter Sensor

209 elektronische Steuereinheit

210 Speicher

211 Prozessor

**Patentansprüche**

1. Verfahren (100) zum Anpassen einer Leistungsbegrenzung eines Verbrennungsmotors eines Hybridfahrzeugs, umfassend

    - Erfassen einer aktuell bereitgestellten Leistung des Verbrennungsmotors P (102) und einer aktuellen Fahrgeschwindigkeit V (103) des Hybridfahrzeugs;
    - Erfassen (104) einer Umgebungstemperatur $T_{env}$ des Hybridfahrzeugs und Ermitteln (105) eines zugehörigen umgebungstemperaturbezogenen Gewichtungsfaktors Gt;
    - Erfassen (106) eines Luftdrucks $Pr_{env}$ in der Umgebung des Hybridfahrzeugs und Ermitteln (107) eines zugehörigen luftdruckbezogenen Gewichtungsfaktors $G_p$;
    - Ermitteln (110) eines Thermalbelastungsindikators STC in Abhängigkeit von einem Verhältnis $R_{pv}$ der erfassten aktuell bereitgestellten Leistung P und der erfassten aktuellen Fahrgeschwindigkeit V sowie von dem umgebungstemperaturbezogene Gewichtsfaktor Gt, dem luftdruckbezogenen Gewichtungsfaktor $G_p$ und einem karosseriebezogenen Gewichtungsfaktor $G_k$; und
    - Begrenzen (111) einer maximal bereitgestellten Leistung des Verbrennungsmotors in Abhängigkeit von dem ermittelten Thermalbelastungsindikator STC.

2. Verfahren nach Anspruch 1, wobei das Ermitteln (110) des Thermalbelastungsindikators STC umfasst, STC als STC = $R_{pv} * G_k * G_t * G_p$ zu ermitteln.

3. Verfahren nach Anspruch 1 oder Anspruch 2, wobei das Ermitteln (108) des Verhältnisses $R_{pv}$ der erfassten aktuell bereitgestellten Leistung P, angegeben in Kilowatt, und der erfassten aktuellen Fahrgeschwindigkeit V, angegeben in Kilometer pro Stunde, umfasst, $R_{pv}$ als $R_{pv} = P^{K1}/(V-K2)$, zumindest wenn V größer oder gleich einer unteren Grenzgeschwindigkeit $V_{th}$, zu ermitteln, wobei K1 ein erster konstanter Faktor in einem Bereich von 1 bis 2 und K2 ein zweiter konstanter Faktor größer 0 und kleiner als $V_{th}$ und angegeben in Kilometer pro Stunde, sind.

4. Verfahren nach Anspruch 3, wobei das Ermitteln (108) des Verhältnisses $R_{pv}$ der erfassten aktuell bereitgestellten Leistung P und der erfassten aktuellen Fahrgeschwindigkeit V umfasst, $R_{pv}$ als $R_{pv} = P^{K1}/(MAX(V, V_{th})-K2)$ zu ermitteln.

5. Verfahren nach Anspruch 4, wobei der erste konstante Faktor K1 = 1,6 beträgt.

6. Verfahren nach Anspruch 4 oder Anspruch 5, wobei der zweite konstante Faktor K2 = 15 Kilometer pro Stunde beträgt.

7. Verfahren nach einem der vorhergehenden Ansprüche, wobei der karosseriebezogene Gewichtungsfaktor von einer Oberfläche eines Frontbereichs des Hybridfahrzeugs abhängt.

8. Verfahren nach Anspruch 7, wobei der karosseriebezogene Gewichtungsfaktor $G_k$ = 1/A beträgt, wobei A angegeben in Quadratmeter eine Konstante im Bereich von 1 bis 10 ist.

9. Verfahren nach einem der vorhergehenden Ansprüche, wobei das Ermitteln (105) des umgebungstemperaturbezogenen Gewichtungsfaktors umfasst, Gt als Gt = $((T_{env}+40)/K3)^2$ zu ermitteln, wobei $T_{env}$ die Umgebungstemperatur in Grad Celsius und K3 ein dritter konstanter Faktor größer als 60 und kleiner als 80 ist.

10. Verfahren nach Anspruch 9, wobei der dritte konstante Faktor K3 = 70 beträgt.

11. Verfahren nach einem der vorhergehenden Ansprüche, wobei das Ermitteln (107) des luftdruckbezogenen Gewichtungsfaktors umfasst, $G_p$ als $G_p$ = K4/$Pr_{env}$ zu ermitteln, wobei $Pr_{env}$ der Luftdruck in der Umgebung des Hybridfahrzeugs in Millibar und K4 ein vierter konstanter Faktor größer als 900 und kleiner als 1100 ist.

12. Verfahren nach Anspruch 11, wobei der vierte konstante Faktor K4 = 995 beträgt.

13. Verfahren nach einem der vorhergehenden Ansprüche, wobei das Ermitteln (110) des Thermalbelastungsindikators STC ein Mittelwert-Filtern umfasst, bei dem der Thermalbelastungsindikator STC durch gleitende Mittelwertbildung über ein Zeitfenster gefiltert wird.

14. Verfahren nach einem der vorhergehenden Ansprüche, außerdem umfassend

- Erfassen (114) einer Kühlmitteltemperatur des Hybridfahrzeugs und Begrenzen (115) der maximal bereitgestellten Leistung des Verbrennungsmotors auch in Abhängigkeit von der erfassten Kühlmitteltemperatur, und/oder
- Erfassen (116) eines Drehmoments des Verbrennungsmotors und Begrenzen (117) der maximal bereitgestellten Leistung des Verbrennungsmotors auch in Abhängigkeit von dem erfassten Drehmoment.

15. Hybridfahrzeug (200), umfassend

- einen Akkumulator (201);
- einen Elektromotor (202), verbunden mit dem Akkumulator (201) und eingerichtet zum Antreiben des Hybridfahrzeugs (200);
- einen Generator (203), verbunden mit dem Akkumulator (201);
- einen Verbrennungsmotor (204), verbunden zumindest mit dem Generator (203) und eingerichtet zumindest zum Betreiben des Generators (203) zum Aufladen des Akkumulators (201);
- eine Mehrzahl von Sensoren (205, 206, 207, 208) zumindest zum Erfassen einer aktuell bereitgestellten Leistung des Verbrennungsmotors P (204), einer aktuellen Fahrgeschwindigkeit V des Hybridfahrzeugs (200), einer Umgebungstemperatur $T_{env}$ des Hybridfahrzeugs (200) und eines Luftdrucks $Pr_{env}$ in der Umgebung des Hybridfahrzeugs (200); und
- eine elektronische Steuereinheit (209), **dadurch gekennzeichnet, dass** die elektronische Steuereinheit (209) dazu eingerichtet ist, ein Verfahren gemäß einem der vorhergehenden Ansprüche durchzuführen.

16. Computerprogrammprodukt, das Codeanteile zum Ausführen von Schritten eines Verfahrens gemäß einem der Ansprüche 1 bis 14 umfasst, wenn sie auf einer programmierbaren Einrichtung ausgeführt werden.

**Claims**

1. Method (100) for adapting a power limitation of an internal combustion engine of a hybrid vehicle, comprising

- sensing a currently supplied power level of the internal combustion engine P (102) and a current velocity V (103) of the hybrid vehicle;
- sensing (104) an ambient temperature $T_{env}$ of the hybrid vehicle and determining (105) an associated ambient-temperature-related weighting factor $G_t$;
- sensing (106) an air pressure $Pr_{env}$ in the surroundings of the motor vehicle and determining (107) an associated air-pressure-related weighting factor $G_p$;
- determining (110) a thermal load indicator STC as a function of a ratio $R_{pv}$ of the sensed currently supplied power level P and the sensed current velocity V as well as of the ambient-temperature-related weighting factor $G_t$, the air-pressure-related weighting factor $G_p$ and a vehicle-bodywork-related weighting factor $G_k$; and
- limiting (111) a maximum supplied power level of the internal combustion engine as a function of the determined thermal load indicator STC.

2. Method according to Claim 1, wherein the determining (110) of the thermal load indicator STC comprises determining STC as STC = $R_{pv} * G_k * G_t * G_p$.

3. Method according to Claim 1 or Claim 2, wherein the determining (108) of the ratio $R_{pv}$ of the sensed, currently supplied power level P, specified in kilowatts, and the sensed current velocity V, specified in kilometres per hour, comprises determining $R_{pv}$ as $R_{pv}$ = $P^{K1}$/ (V-K2), at least if V is higher than or equal to a lower limiting speed $V_{th}$, wherein K1 is a first constant factor in a range from 1 to 2, and K2 is a second constant factor which is higher than 0 and lower than $V_{th}$ and specified in kilometers per hour.

4. Method according to Claim 3, wherein the determining (108) of the ratio $R_{pv}$ of the sensed, currently supplied power level P and of the sensed current velocity V comprises determining $R_{pv}$ as $R_{pv}$ = $P^{K1}$/ (MAX(V, $V_{th}$) —K2) .

5. Method according to Claim 4, wherein the first constant factor K1 = 1.6.

6. Method according to Claim 4 or Claim 5, wherein the second constant factor K2 = 15 kilometers per hour.

7. Method according to one of the preceding claims, wherein the vehicle-bodywork-related weighting factor depends on a surface of a front area of the hybrid vehicle.

8. Method according to Claim 7, wherein the vehicle-bodywork-related weighting factor $G_k = 1/A$, wherein A is a constant in the range from 1 to 10 specified in square metres.

9. Method according to one of the preceding claims, wherein the determining (105) of the ambient-temperature-related weighting factor comprises determining $G_t$ as $G_t = ( (T_{env}+40)/K3)^2$, wherein $T_{env}$ is the ambient temperature in degrees Celsius, and K3 is a third constant factor which is greater than 60 and lower than 80.

10. Method according to Claim 9, wherein the third constant factor K3 = 70.

11. Method according to one of the preceding claims, wherein the determining (107) of the air-pressure-related weighting factor comprises determining $G_p$ as $G_p = K4/ Pr_{env}$, wherein $Pr_{env}$ is the air pressure in the surroundings of the hybrid vehicle in millibars, and K4 is a fourth constant factor which is greater than 900 and less than 1100.

12. Method according to Claim 11, wherein the fourth constant factor K4 = 995.

13. Method according to one of the preceding claims, wherein the determining (110) of the thermal load indicator STC comprises mean value filtering during which the thermal load indicator STC is filtered by sliding averaging over a time window.

14. Method according to one of the preceding claims, also comprising

- sensing (114) a coolant temperature of the hybrid vehicle and limiting (115) the maximum supplied power level of the internal combustion engine also as a function of the sensed coolant temperature, and/or
- sensing (116) a torque of the internal combustion engine and limiting (117) the maximum supplied power level of the internal combustion engine also as a function of the sensed torque.

15. Hybrid vehicle (200) comprising

- an accumulator (201);
- an electric motor (202), connected to the accumulator (201) and configured to drive the hybrid vehicle (200);
- a generator (203) connected to the accumulator (201);
- an internal combustion engine (204) connected at least to the generator (203) and configured at least to operate the generator (203) to charge the accumulator (201);
- a multiplicity of sensors (205, 206, 207, 208) at least for sensing a currently supplied power level of the internal combustion engine P (204), a current velocity V of the hybrid vehicle (200), an ambient temperature $T_{env}$ of the hybrid vehicle (200) and an air pressure $Pr_{env}$ in the surroundings of the hybrid vehicle (200); and
- an electronic control unit (209), **characterized in that** the electronic control unit (209) is configured to carry out a method according to one of the preceding claims.

16. Computer program product which comprises pieces of code for executing steps of a method according to one of Claims 1 to 14 when it is executed on a programmable device.

## Revendications

1. Procédé (100) permettant d'adapter une limitation de puissance d'un moteur à combustion interne d'un véhicule hybride, comprenant les étapes consistant à

- détecter une puissance actuellement fournie du moteur à combustion interne P (102) et une vitesse de conduite actuelle V (103) du véhicule hybride ;
- détecter (104) une température ambiante $T_{env}$ du véhicule hybride, et déterminer (105) un facteur de pondération associé $G_t$ relatif à la température ambiante ;
- détecter (106) une pression atmosphérique $Pr_{env}$ dans l'environnement du véhicule hybride, et déterminer (107) un facteur de pondération associé $G_p$ relatif à la pression atmosphérique ;
- déterminer (110) un indicateur de charge thermique STC en fonction d'un rapport $R_{pv}$ entre la puissance P actuellement fournie détectée et la vitesse de conduite V actuelle détectée, ainsi qu'en fonction du facteur de pondération $G_t$ relatif à la température ambiante, du facteur de pondération $G_p$ relatif à la pression atmosphérique et d'un facteur de pondération $G_k$ relatif à la carrosserie ; et
- limiter (111) une puissance fournie au maximum du moteur à combustion interne en fonction de l'indicateur de charge thermique STC déterminé.

2. Procédé selon la revendication 1, dans lequel la détermination (110) de l'indicateur de charge thermique STC comprend la détermination de STC comme STC = $R_{pv} * G_k * G_t * G_p$.

3. Procédé selon la revendication 1 ou 2, dans lequel la détermination (108) du rapport $R_{pv}$ entre la puissance actuellement détectée P, indiquée en kilowatts, et la vitesse de conduite actuelle V détectée, indiquée en kilomètres par heure, comprend la détermination de $R_{pv}$ comme $R_{pv} = P^{K1}/ (V-K2)$, au moins si V est supérieure ou égale à une vitesse limite inférieure $V_{th}$, K1 étant un premier facteur constant dans une plage de 1 à 2, et K2 étant un deuxième facteur constant supérieur à 0 et inférieur à $V_{th}$ et indiqué en kilomètres par heure.

4. Procédé selon la revendication 3, dans lequel la détermination (108) du rapport du $R_{pv}$ entre la puissance P actuellement fournie détectée et la vitesse de conduite actuelle V détectée comprend la détermination de $R_{pv}$ comme $R_{pv} = P^{K1}/ (MAX (V, V_{th}) -K2)$.

5. Procédé selon la revendication 4, dans lequel le premier facteur constant est K1 = 1,6.

6. Procédé selon la revendication 4 ou 5, dans lequel le deuxième facteur constant est K2 = 15 kilomètres par heure.

7. Procédé selon l'une quelconque des revendications précédentes, dans lequel le facteur de pondération relatif à la carrosserie dépend d'une surface d'une zone frontale du véhicule hybride.

8. Procédé selon la revendication 7, dans lequel le facteur de pondération relatif à la carrosserie est $G_k = 1/A$, A, spécifié en mètres carrés, étant une constante dans la plage de 1 à 10.

9. Procédé selon l'une quelconque des revendications précédentes, dans lequel la détermination (105) du facteur de pondération relatif à la température ambiante comprend la détermination de $G_t$ comme $G_t = ((T_{env}+40)/K3)^2$, $T_{env}$ étant la température ambiante en degrés Celsius, et K3 étant un troisième facteur constant supérieur à 60 et inférieur à 80.

10. Procédé selon la revendication 9, dans lequel le troisième facteur constant est K3 = 70.

11. Procédé selon l'une quelconque des revendications précédentes, dans lequel la détermination (107) du facteur de pondération relatif à la pression atmosphérique comprend la détermination de $G_p$ comme $G_p = K4/Pr_{env}$, $Pr_{env}$ étant la pression atmosphérique dans l'environnement du véhicule hybride en millibars, et K4 étant un quatrième facteur constant supérieur à 900 et inférieur à 1100.

12. Procédé selon la revendication 11, dans lequel le quatrième facteur constant est K4 = 995.

13. Procédé selon l'une quelconque des revendications précédentes, dans lequel la détermination (110) de l'indicateur de charge thermique STC comprend un filtrage médian dans lequel l'indicateur de charge thermique STC est filtré par un calcul de la moyenne mobile dans une fenêtre de temps.

14. Procédé selon l'une quelconque des revendications précédentes, comprenant en outre les étapes consistant à

    - détecter (114) une température de réfrigérant du véhicule hybride, et limiter (115) la puissance fournie au maximum du moteur à combustion interne également en fonction de la température de réfrigérant détectée, et/ou
    - détecter (116) un couple du moteur à combustion interne, et limiter (117) la puissance fournie au maximum du moteur à combustion interne également en fonction du couple détecté.

15. Véhicule hybride (200), comprenant

    - un accumulateur (201) ;
    - un moteur électrique (202) relié à l'accumulateur (201) et aménagé pour entraîner le véhicule hybride (200) ;
    - un générateur (203) relié à l'accumulateur (201) ;
    - un moteur à combustion interne (204) relié au moins au générateur (203) et aménagé au moins pour faire fonctionner le générateur (203) afin de recharger l'accumulateur (201) ;
    - une pluralité de capteurs (205, 206, 207, 208) au moins pour détecter une puissance actuellement fournie du moteur à combustion interne P (204), une vitesse de conduite actuelle V du véhicule hybride (200), une température ambiante $T_{env}$ du véhicule hybride (200) et une pression atmosphérique $Pr_{env}$ dans l'environnement du véhicule hybride (200) ; et
    - une unité de commande électronique (209), **caractérisé en ce que** l'unité de commande électronique (209) est aménagée pour effectuer un procédé selon l'une quelconque des revendications précédentes.

16. Produit programme informatique qui comprend des parties de code pour exécuter des étapes d'un procédé selon l'une quelconque des revendications 1 à 14 si elles sont exécutées sur un équipement programmable.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019047566 A1
- DE 102016223173
- US 2017050633 A1